(19) **Europäisches Patentamt / European Patent Office / Office européen des brevets**

(11) **EP 4 715 900 A1**

(12) **EUROPEAN PATENT APPLICATION**
published in accordance with Art. 153(4) EPC

(43) Date of publication:
**25.03.2026 Bulletin 2026/13**

(21) Application number: **25748994.8**

(22) Date of filing: **24.01.2025**

(51) International Patent Classification (IPC):
*H01M 4/38* (2006.01)  *H01M 4/583* (2010.01)
*H01M 4/62* (2006.01)  *H01M 10/052* (2010.01)
*H01M 4/02* (2006.01)

(52) Cooperative Patent Classification (CPC):
**H01M 4/02; H01M 4/38; H01M 4/583; H01M 4/62; H01M 10/052; Y02E 60/10**

(86) International application number:
**PCT/KR2025/001402**

(87) International publication number:
**WO 2025/165090 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.01.2024 KR 20240013211**

(71) Applicant: **LG Energy Solution, Ltd.**
**Seoul 07335 (KR)**

(72) Inventors:
• **KO, Minjin**
  **Daejeon 34122 (KR)**
• **KWON, Yohan**
  **Daejeon 34122 (KR)**
• **MIN, Jiwon**
  **Daejeon 34122 (KR)**
• **LEE, Jaewook**
  **Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ELECTRODE SLURRY, NEGATIVE ELECTRODE, AND LITHIUM SECONDARY BATTERY COMPRISING SILICON CARBON COMPOSITE**

(57)    The present invention relates to a negative electrode slurry, a negative electrode, a lithium secondary battery, a battery module, and a battery pack comprising: a silicon carbon composite having a pH of 6 to 8 and a silicon content of 40 parts by weight to 60 parts by weight with respect to 100 parts by weight in total of the silicon carbon composite; a cellulose-based binder; and a conductive material..

EP 4 715 900 A1

**Description**

[Technical Field]

This application claims priority to and the benefit of Korean Patent Application No. 10-2024-0013211 filed in the Korean Intellectual Property Office on January 29, 2024, the entire contents of which are incorporated herein by reference.

The present invention relates to a negative electrode slurry including a silicon-carbon composite, a negative electrode, a lithium secondary battery, a battery module, and a battery pack.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding. Recently, with the rapid spread of electronic devices using batteries, such as mobile phones, laptop computers, electric vehicles, electrically-powered tools, and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In the lithium secondary battery, in a state in which an organic electrolyte solution or a polymer electrolyte solution is filled between a positive electrode and a negative electrode each made of an active material capable of intercalation and deintercalation of lithium ions, electrical energy is produced by oxidation/reduction reactions at a time when lithium ions are intercalated/deintercalated into/from the positive electrode and the negative electrode.

Graphite is mainly used as a negative electrode active material in lithium secondary batteries. However, graphite has a low capacity per unit mass of 372 mAh/g, making it difficult to increase the capacity of lithium secondary batteries. Accordingly, in order to increase the energy density of lithium secondary batteries, non-carbon-based negative electrode materials with higher energy density than graphite, such as silicon, tin, and oxides thereof, are being developed. Although such non-carbon-based negative electrode materials have the high capacity, but the initial efficiency is low. Therefore, there are problems in that lithium consumption during initial charging and discharging is high and irreversible capacity loss is large.

Patent Literature

(Patent Document 1) Korean Patent Application Publication No. 10-2022-0089687 A

[Detailed Description of the Invention]

[Technical Problem]

Silicon-carbon composites have superior initial capacity and energy efficiency compared to graphite or silicon oxides but suffer from low phase stability during the negative electrode manufacturing process using a negative electrode slurry or during storage of the negative electrode slurry. Accordingly, exemplary embodiments of the present invention provide a negative electrode slurry including a silicon-carbon composite capable of improving phase stability of the negative electrode slurry, and a negative electrode. In addition, exemplary embodiments of the present invention relate to a lithium secondary battery, a battery module, and a battery pack, which include the negative electrode described above.

[Technical Solution]

An exemplary embodiment of the present invention provides a negative electrode slurry including: a silicon-carbon composite having a pH of 6 to 8 and a silicon content of 40 to 60 parts by weight based on a total of 100 parts by weight of the silicon-carbon composite; a cellulose-based binder; and a conductive material.

An exemplary embodiment of the present invention provides the negative electrode slurry in which, when an intensity value of a maximum peak in a 284 to 285.5 eV band region is set to 1 in XPS analysis of a surface of the silicon-carbon composite, an intensity value of a maximum peak in a 288 to 289 eV band region is 0.1 or less.

An exemplary embodiment of the present invention provides a negative electrode including a current collector; and a negative electrode active material layer provided on at least one surface of the current collector and including the negative electrode slurry.

An exemplary embodiment of the present invention provides a lithium secondary battery including the negative electrode; a separator; and a positive electrode.

An exemplary embodiment of the present invention provides a battery module including the lithium secondary battery.

An exemplary embodiment of the present invention provides a battery pack including the lithium secondary battery.

An exemplary embodiment of the present invention provides a battery pack including the battery module.

[Advantageous Effects]

A negative electrode slurry according to an exemplary embodiment of the present invention includes a silicon-carbon composite having a specific pH while containing a specific amount of silicon, so that a change in the molecular weight of a cellulose-based binder due to interactions between the cellulose-based binder and the negative electrode active material is small, and the viscosity of the negative electrode slurry does not decrease, resulting in a negative electrode slurry having excellent phase stability, and enabling a uniform electrode to be manufactured.

[Best Mode]

Hereinafter, the present specification will be described in more detail.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

In the present specification, the carbon (C) content in the negative electrode active material particles may be analyzed using a CS analyzer (Bruker, G8 Galileo), and the oxygen (O) content may be analyzed using an ONH analyzer (Bruker, G-4 ICARUS SeriesII).

In the present specification, the average particle diameter D50 may be defined as a particle diameter corresponding to 50% of the cumulative volume on the particle size distribution curve of the particles (graph curve of the particle size distribution). The average particle diameter may be measured using, for example, a laser diffraction method. In the laser diffraction method, in general, particle diameters ranging from a submicron region to several millimeters can be measured, and results with high reproducibility and high resolvability can be obtained.

The measurement of the average particle diameter may be confirmed using water and Triton-X100 dispersant with a Microtrac apparatus (manufacturer: Microtrac model name: S3500). Specifically, the average particle diameter of a positive electrode active material may be measured under a condition of a refractive index of 1.5 to 1.7, and the average particle diameter of a negative electrode active material may be measured under a condition of a refractive index of 1.97 or 2.42. For example, after dispersing particles in a dispersion medium, the resulting dispersion is introduced into a commercially available laser diffraction particle size measuring device and irradiated with an ultrasonic wave of about 28 kHz with an output of 60 W. Thereafter, a cumulative volume particle size distribution graph is obtained, and then the average particle diameter may be determined by obtaining the particle size corresponding to 50% of the cumulative volume.

In the present specification, the specific surface area of the negative electrode active material particles may be measured by a BET (Brunauer-Emmett-Teller; BET) method. For example, it may be measured with a BET six-point method by means of a nitrogen gas adsorption distribution method using a porosimetry analyzer (Bell Japan Inc., Belsorp-mini II).

**<Negative electrode slurry>**

A negative electrode slurry according to an exemplary embodiment of the present invention includes a silicon-carbon composite having a pH of 6 to 8 and a silicon content of 40 to 60 parts by weight based on a total of 100 parts by weight of the silicon-carbon composite; a cellulose-based binder; and a conductive material.

The pH of the silicon-carbon composite is 6 to 8. For example, the lower limit of the pH of the silicon-carbon composite is 6, 6.1, 6.2, 6.3, 6.4, or 6.5, and the upper limit of the pH of the silicon-carbon composite is 8, 7.9, 7.8, 7.7, or 7.6. As such, when the pH of the silicon-carbon composite is 6 to 8, a change in the molecular weight due to interactions between the binder and the negative electrode active material is small, and the viscosity of the negative electrode slurry does not decrease, enabling a stable slurry to be manufactured. The pH of the silicon-carbon composite may be measured by dispersing 10 g of the silicon-carbon composite in 100 g of water.

The process for manufacturing the silicon-carbon composite may be carried out using various methods. For example, the silicon-carbon composite may be manufactured by a step of manufacturing a carbon scaffold, a step of thermally treating silane gas to grow silicon inside the carbon, and, if necessary, a step of treating the external surface. Additionally, the pH of the silicon-carbon composite may change depending on raw materials, heat treatment atmosphere, or temperature used in each step. For example, a method of performing heat treatment while mixing butane gas and $CO_2$, or a method of performing heat treatment while mixing butane gas and ammonia gas may be used.

In the case of the vapor deposition method, which is a general method for manufacturing the silicon-carbon composite, a solution is not used, and even in the case of a process using a solution, a change in pH may occur due to an oxidation or reduction reaction of the silicon-carbon composite itself. Therefore, the pH of the process solution and the pH of the silicon-carbon composite in the process of manufacturing the silicon-carbon composite are distinguished. The pH of the silicon-carbon composite may be measured by dispersing the silicon-carbon composite in water.

The pH of the silicon-carbon composite varies depending on the degree of oxidation of the silicon-carbon composite, that is, the surface functional groups of carbon and the degree of oxidation of silicon. For example, when the pH of the silicon-carbon composite is 6, an amount of acidic functional groups is not large. As an example, the degree of oxidation of carbon is determined depending on conditions of the manufacturing process of the silicon-carbon composite. Specifically, when a polymer resin is carbonized at a high temperature, graphite without functional groups exhibits a neutral or higher pH, whereas at a lower temperature, oxygen remains in some of the carbon. Alternatively, when the polymer resin is carbonized at a high temperature in a $CO_2$ or steam atmosphere, not in an inert atmosphere, the amount of oxygen in the carbon increases. The degree of oxidation of silicon varies depending on the temperature and atmosphere of the carbonization process. When the polymer resin is carbonized at a high temperature in a $CO_2$ or steam atmosphere, not in an inert atmosphere, some silicon is also oxidized.

Cellulose-based binders such as CMC act as thickeners in the negative electrode slurry and are therefore important in controlling the phase stability, i.e., viscosity, of the slurry. The molecular weight of a cellulose-based binder such as CMC tends to decrease due to the acidic functional group of the silicon-carbon composite, which may lead to a decrease in the viscosity of the negative electrode slurry. When a decrease in the viscosity of the negative electrode slurry occurs, it can cause quality and production defects during coating, which can significantly affect the overall yield. Therefore, to control this, a method of covering an acidic portion of the silicon-carbon composite, for example, a portion including an acidic functional group, with a carbon coating may be selected. That is, such a phenomenon can be controlled depending on the amount or quality of the carbon coating, which can be confirmed through the pH of the negative electrode slurry, the initial capacity and efficiency of the electrode, the XPS analysis, or the like.

The silicon content in the silicon-carbon composite is 40 to 60 parts by weight, for example, 45 to 55 parts by weight, based on 100 parts by weight of the silicon-carbon composite. When the silicon content is 40 parts by weight or more, the initial capacity is excellent, facilitating an increase in electrode capacity, and when the silicon content is 60 parts by weight or less, a composite with a uniform silicon distribution can be manufactured. The silicon content in the silicon-carbon composite is determined by inversely calculating the silicon content after obtaining the carbon (C) content and oxygen (O) content in the silicon-carbon composite. The carbon (C) content may be analyzed using a CS analyzer (Bruker, G8 Galileo), and the oxygen (O) content may be analyzed using an ONH analyzer (Bruker, G-4 ICARUS SeriesII).

According to an exemplary embodiment of the present invention, the oxygen (O) content in the silicon-carbon composite is 10 parts by weight or less based on a total of 100 parts by weight of the silicon-carbon composite. Specifically, the oxygen content in the silicon-carbon composite is 10 parts by weight or less, 9 parts by weight or less, 8 parts by weight or less, 7 parts by weight or less, 6 parts by weight or less, or 5 parts by weight or less, and 0 parts by weight or more, 1 part by weight or more, 1.5 parts by weight or more, 1.6 parts by weight or more, 1.7 parts by weight or more, or 1.8 parts by weight or more. When the oxygen content is 10 parts by weight or less based on 100 parts by weight of the silicon-carbon composite, the capacity efficiency of the silicon-carbon composite is excellent.

In an example, a total amount of carbon and silicon is 90 to 100 parts by weight based on 100 parts by weight of the silicon-carbon composite.

According to an example, the silicon-carbon composite may have a structure including a porous carbon structure and silicon provided inside and/or outside the porous carbon structure, or may have a structure including a porous silicon structure and carbon provided inside and/or outside the porous silicon structure. The silicon-carbon composite does not need to be manufactured by a specific manufacturing method and may be manufactured by a method known in the art. For example, the manufacturing of the silicon-carbon composite may be carried out by a method including a step of manufacturing a porous carbon structure, for example, a step of thermally decomposing a polymer to manufacture a porous carbon structure, and a step of flowing silane gas to the porous carbon structure and thermally decomposing it at a high temperature to grow silicon inside and/or outside the porous carbon structure. Additionally, depending on the purpose, a step of modifying a surface layer with carbon or another component may be further carried out. In addition, as another example, Si and $SiO_2$ may be simultaneously deposited to manufacture a Si-containing $SiO_x$ oxide ($0 < x < 2$), the oxide may be chemically etched to manufacture a porous silicon structure, and the porous silicon structure may be subjected to a heat treatment process with a carbon gas, resulting in the manufacture of a silicon-carbon composite.

According to an exemplary embodiment of the present invention, when an intensity value of a maximum peak in a 284 to 285.5 eV band region is set to 1 in XPS analysis of a surface of the silicon-carbon composite, an intensity value of a maximum peak in a 288 to 289 eV band region is 0.1 or less. In the XPS analysis, a 284 to 289 eV band region includes -OH, C=O, and -COOH regions, which may affect the decomposition reaction caused by interactions with the cellulose-based binder.

In XPS analysis, the intensity value of the maximum peak refers to the maximum height of the peak, and represents the intensity value of the maximum peak within a specific range, regardless of peak overlap.

Specifically, when the intensity value of the maximum peak in the 284 to 285.5 eV band region in XPS analysis of the surface of the silicon-carbon composite is set to 1, the intensity value of the maximum peak in the 288 to 289 eV band region may be 0.09 or less, 0.08 or less, 0.07 or less, 0.06 or less, 0.05 or less, 0.04 or less, or 0.03 or less. When the intensity value of the maximum peak in the 288 to 289 eV band region falls within the specific range, the decrease in the viscosity of the cellulose-based binder can be suppressed as the decomposition reaction is suppressed by interactions between the surface functional group of the silicon-carbon composite and the cellulose-based binder. Here, the XPS analysis may be carried out under the following conditions.

- Device used: NEXSA G2, Thermo Fisher Scientific (Equipment name ESCA-03)
- Sample preparation: the powdered sample is placed into the powder holder and pressed, and the measurement surface is flattened.
- Measurement conditions:

X-ray source: Monochromated Al K$\alpha$ (1486.6 eV)
X-ray spot size: 400 $\mu$m
Etching conditions (sputtering gun): monatomic Ar (energy: 1,000 eV, current: low, raster width: 2 mm), 0.13 nm/s etching rate (based on $Ta_2O_5$, which may vary depending on the sample)
Charge compensation (flood gun): 0.3 V, 150 $\mu$A
Survey scan: pass energy 200 eV, energy step 1 eV
Narrow scan: pass energy 50 eV, energy step 0.1 eV
Sensitivity factor (SF): Al THERMO1, Energy correction factor (ECF): TPP-2MBackground subtraction" Smart
The plasmon loss peak of Si is not included in the quantitative analysis.

According to an exemplary embodiment of the present invention, the silicon-carbon composite may include a carbon layer provided on at least a portion of a surface thereof.

According to an exemplary embodiment of the present invention, a content of the carbon layer is 0.1 to 50 parts by weight based on the total of 100 parts by weight of the total silicon-carbon composite. Specifically, the carbon layer may be included in an amount of 0.1 to 30 parts by weight, 0.1 to 20 parts by weight, 0.5 to 15 parts by weight, or 1 to 10 parts by weight based on the total of 100 parts by weight of the silicon-carbon composite.

When the specific range is satisfied, the conductivity of the silicon-carbon composite is improved, and the volume change of the silicon-carbon composite during charging and discharging of the battery is easily suppressed, resulting in an improvement in the life characteristics of the battery.

The carbon layer may be formed by a chemical vapor deposition (CVD) method using at least one hydrocarbon gas selected from the group consisting of methane, ethane, propane, butane, and acetylene.

The carbon layer may include at least one selected from the group consisting of amorphous carbon and crystalline carbon.

The crystalline carbon can further improve the conductivity of the silicon-carbon composite. The crystalline carbon may include at least one selected from the group consisting of fullerene, carbon nanotubes, and graphene.

The amorphous carbon can appropriately maintain the strength of the carbon layer to suppress expansion of the silicon-carbon composite. The amorphous carbon may be at least one carbide selected from the group consisting of tar, pitch, and other organic materials, or a carbon-based material formed by using a hydrocarbon as a source of chemical vapor deposition.

The carbide of the other organic materials may be a carbide of sucrose, glucose, galactose, fructose, lactose, mannose, ribose, aldohexose, ketohexose, and a carbide of an organic material selected from combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon may be methane, ethane, ethylene, acetylene, propane, butane, butene, pentane, isobutane, hexane, or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

According to an exemplary embodiment of the present invention, an average particle diameter D50 of the silicon-carbon composite may be 1 $\mu$m to 20 $\mu$m, for example, 1.5 $\mu$m to 15 $\mu$m, or 3 $\mu$m to 10 $\mu$m. When the average particle diameter of the silicon-carbon composite falls within the specific range, the dispersibility of the active material during slurry manufacturing is appropriate, the structural stability of the active material during charging and discharging is ensured, and coating defects caused by large particles during electrode coating are minimized. In addition, it is possible to prevent the issue of increased volume expansion and contraction levels due to excessively large particle diameter and to prevent the issue of decreased initial efficiency due to excessively small particle diameter.

According to an exemplary embodiment of the present invention, a specific surface area of the silicon-carbon composite may be 20 m$^2$/g or less, 15 m$^2$/g or less, 10 m$^2$/g or less, or 5 m$^2$/g or less. The specific surface area of the above silicon-carbon composite may be 0.1 m$^2$/g or more, 1 m$^2$/g or more, 1.5 m$^2$/g or more, 2 m$^2$/g or more, or 3 m$^2$/g or more. The specific surface area refers to a total specific surface area of a substance measured by a BET technique.

The BET (Brunauer/Emmett/Teller) technique is commonly used in the art to determine the accessible surface area of a material by using an inert gas, such as nitrogen, to measure an amount of gas adsorbed on the material. For example, the measurement may be carried out using BET measurement equipment (BEL-SORP-MAX, Nippon Bell) by performing degassing at 200°C for 8 hours and performing adsorption/desorption of nitrogen gas at 77K.

The negative electrode binder can serve to improve the adhesion between negative electrode active material particles and the adhesive strength between the negative electrode active material particles and the negative electrode current collector.

According to an exemplary embodiment of the present invention, the negative electrode binder is a cellulose-based binder, and may include, for example, at least one selected from the group consisting of carboxymethyl cellulose (CMC), starch, hydroxypropyl cellulose, and regenerated cellulose, and may also include various copolymers thereof, or polymers having derivative structures. When the cellulose-based binder is used together with the silicon-carbon composite having a pH of 6 to 8 and a silicon content of 40 to 60 parts by weight based on a total of 100 parts by weight of the silicon-carbon composite, phase stability of the slurry can be maintained, and high-capacity electrode can be manufactured.

The negative electrode binder may be included in an amount of 0.5 to 20 parts by weight, specifically 1 to 15 parts by weight, based on a total of 100 parts by weight of the solid content of the negative electrode slurry.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powder; a conductive whisker such as zinc oxide and potassium titanate; a conductive metal oxide such as titanium oxide; a conductive material such as polyphenylene derivative, and the like may be used.

The conductive material may be included in an amount of 0.5 to 25 parts by weight, specifically 1 to 20 parts by weight, based on the total of 100 parts by weight of the solid content of the negative electrode slurry.

The negative electrode slurry may further include an additional negative electrode active material.

As the additional negative electrode active material, a compound capable of reversible intercalation and deintercalation of lithium may be used. Specific examples thereof may include a carbon-based active material such as artificial graphite, natural graphite, graphitized carbon fiber, and amorphous carbon; a metallic substance capable of alloying with lithium, such as Si, Al, Sn, Pb, Zn, Bi, In, Mg, Ga, Cd, a Si alloy, a Sn alloy, or an Al alloy; a metal oxide into which lithium can be doped and from which lithium can be de-doped, such as SiO$_\beta$ ($0<\beta<2$), SnO$_2$, vanadium oxide, lithium titanium oxide, and lithium vanadium oxide; or a composite including the metallic substance and the carbonaceous material, such as a Si-C composite or a Sn-C composite, and any one thereof or a mixture of two or more thereof may be used.

Additionally, low-crystallinity carbon and high-crystallinity carbon may be used as the carbonaceous material. Representative examples of the low-crystallinity carbon include soft carbon and hard carbon, and representative examples of the high-crystallinity carbon include irregular, plate-like, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

According to an exemplary embodiment of the present invention, a negative electrode slurry further including a carbon-based active material is provided. That is, the additional negative electrode active material may be a carbon-based active material, and may include, for example, graphite, specifically, at least one selected from the group consisting of artificial graphite and natural graphite.

A weight ratio of the negative electrode active material and the additional negative electrode active material included in the negative electrode slurry may be 1:99 to 99:1, and specifically 10:90 to 90:10, for example 5:95 to 50:50 or 10:90 to 30:70.

The total negative electrode active material included in the negative electrode slurry may be included in an amount of 60 to 99 parts by weight, specifically 70 to 98 parts by weight, based on the total of 100 parts by weight of the solid content of the negative electrode slurry.

The negative electrode slurry may further include a thickener. The thickener may be carboxymethylcellulose (CMC), but is not limited thereto, and thickeners used in the art may be appropriately adopted.

The thickener may be included in an amount of 0.5 to 20 parts by weight, specifically 0.5 to 15 parts by weight, based on the total of 100 parts by weight of the solid content of the negative electrode slurry.

The negative electrode slurry may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, the solid content of the negative electrode slurry may be 20 to 75 parts by weight, specifically 30 to 70 parts by weight based on the total of 100 parts by weight of the negative electrode slurry.

### <Negative Electrode>

In addition, a negative electrode according to an exemplary embodiment of the present invention includes a current collector; and a negative electrode active material layer provided on at least one surface of the current collector and including the negative electrode slurry.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 $\mu$m to 20 $\mu$m. However, the thickness of the current collector is not limited thereto.

The negative electrode active material layer may be formed by applying a negative electrode slurry including a negative electrode active material, a binder, and a conductive material, and, if necessary, a thickener, to at least one surface of a current collector, followed by drying and rolling.

### <Lithium Secondary Battery>

A lithium secondary battery according to an exemplary embodiment of the present invention may include the negative electrode according to an exemplary embodiment described above. Specifically, the lithium secondary battery may include a negative electrode, a positive electrode, and a separator interposed between the positive electrode and the negative electrode, and may additionally include an electrolyte solution. Since the negative electrode has been described above, a detailed description thereof is omitted.

The positive electrode may include a positive electrode current collector and a positive electrode active material layer formed on the positive electrode current collector and including the positive electrode active material.

The positive electrode current collector is not particularly limited as long as it has conductivity without causing a chemical change in the battery, and for example, stainless steel, aluminum, nickel, titanium, fired carbon, or aluminum or stainless steel surface-treated with carbon, nickel, titanium, silver, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO$_2$) and a lithium nickel oxide (LiNiO$_2$), or a compound substituted with one or more transition metals; a lithium iron oxide such as LiFe$_3$O$_4$; a lithium manganese oxide such as chemical formula Li$_{1+c1}$Mn$_{2-c1}$O$_4$ (0≤c1≤0.33), LiMnO$_3$, LiMn$_2$O$_3$ and LiMnO$_2$; a lithium copper oxide (Li$_2$CuO$_2$); a vanadium oxide such as LiV$_3$O$_8$, V$_2$O$_5$ and Cu$_2$V$_2$O$_7$; a Ni-site type lithium nickel oxide represented by chemical formula LiNi$_{1-c2}$M$_{c2}$O$_2$ (where M is at least one selected from the group consisting of Co, Mn, Al, Cu, Fe, Mg, B, and Ga, and satisfies 0.01≤c2≤0.5); a lithium manganese composite oxide represented by chemical formula LiMn$_{2-c3}$M$_{c3}$O$_2$ (where M is at least one selected from the group consisting of Co, Ni, Fe, Cr, Zn and Ta, and satisfies 0.01≤c3≤0.1) or Li$_2$Mn$_3$MO$_8$ (where M is at least one selected from the group consisting of Fe, Co, Ni, Cu and Zn); LiMn$_2$O$_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM), sulfonated-EPDM, styrene butadiene rubber (SBR), fluoro rubber, or various copolymers thereof, and the like, and any one thereof or a mixture of two or more thereof may be used.

The positive electrode and the negative electrode can be manufactured according to a conventional method for manufacturing a positive electrode and a negative electrode, except using the positive electrode and negative electrode active materials described above. Specifically, each may be manufactured by applying a slurry for active material layer formation including the active material and, optionally, a binder and a conductive material, onto a current collector, followed by drying and rolling. In this case, the types and contents of the positive electrode and negative electrode active materials, the binder, and the conductive material are as described above. The solvent may be a solvent that is generally used in the relevant technical field, and may include dimethyl sulfoxide (DMSO), isopropyl alcohol, N-methylpyrrolidone (NMP), acetone, or water, and one of these may be used alone, or a mixture of two or more may be used. A used amount of the solvent is sufficient so long as it can dissolve or disperse the active material, the conductive material, and the binder in consideration of a coating thickness of a slurry and a manufacturing yield, and then, allows for a viscosity capable of exhibiting excellent thickness uniformity when applied to manufacture a positive electrode and a negative electrode. In addition, as another method, the positive electrode and the negative electrode may also be manufactured by casting a composition for active material layer formation on a separate support, and then laminating a film obtained by delaminating it from the support onto a current collector layer.

The separator serves to separate the negative electrode and the positive electrode and to provide a migration pathway for lithium ions, in which any separator may be used as the separator without particular limitation as long as it is typically used in a secondary battery, and particularly, a separator having high moisture-retention ability for an electrolyte solution as well as a low resistance to the migration of ions of the electrolyte solution may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

The electrolyte solution may include, but is not limited to, an organic liquid electrolyte, an inorganic liquid electrolyte, a solid polymer electrolyte, a gel-type polymer electrolyte, a solid inorganic electrolyte, and a molten inorganic electrolyte, which can be used in the manufacture of a lithium secondary battery.

Specifically, the electrolytic solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and have high permittivity to dissociate a lithium salt well, thus can be preferably used. When the cyclic carbonate is mixed with a linear carbonate with low viscosity and low permittivity, such as dimethyl carbonate or diethyl carbonate, in a suitable ratio and used, an electrolytic solution with high electric conductivity may be prepared, and therefore, may be more preferably used.

A lithium salt may be used as the metal salt, and the lithium salt is a material that is readily soluble in the non-aqueous electrolytic solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolytic solution for the purpose of improving life characteristics of the battery, suppressing a decrease in battery capacity, improving discharge capacity of the battery, and the like, in addition to the above-described electrolytic solution components.

According to an exemplary embodiment of the present invention, a battery module including the lithium secondary battery as a unit cell, a battery pack including the same, and a battery pack including the battery module are provided. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

Mode for Invention

**<Preparation of Silicon-Carbon Composite>**

Example 1-1

1.0 g of amorphous porous carbon scaffold having a specific surface area of 1850 to 1900 $m^2$/g and a pore volume 0.80 to 0.85 $cm^3$/g was put into a ceramic crucible, which was then placed at the center of a horizontal tube furnace. After sealing the furnace and purging it with nitrogen gas, the furnace temperature was increased to 400 to 550°C at a rate of 10°C/min. Then, silane gas and hydrogen gas were introduced while varying their flow rates and held for 30 to 90 minutes so that the silicon content became 48 parts by weight based on 100 parts by weight of the silicon-carbon composite. After the furnace temperature was further increased to 780 to 900°C at a rate of 10°C/min, butane gas was introduced while varying its flow rates and held for 30 to 60 minutes, resulting in preparation of a silicon-carbon composite having the characteristics shown in Table 1.

Example 1-2

The same process as in Example 1-1 was performed, except that the flow rate of silane gas was increased so that the silicon content in the silicon-carbon composite became 51 parts by weight.

Example 1-3

The same process as in Example 1-1 was performed, except that, during the preparation of the silicon-carbon composite, the flow rate of silane gas was increased so that the silicon content became 49 parts by weight, and in the final stage of holding butane gas, butane gas and $CO_2$ were mixed and subjected to heat treatment.

Comparative Example 1-1

The same process as in Example 1-1 was performed, except that the final stage of holding butane gas during the preparation of the silicon-carbon composite was omitted.

Comparative Example 1-2

The same process as in Example 1-1 was performed, except that in the final stage of holding butane gas during the preparation of the silicon-carbon composite, butane gas and ammonia gas were mixed and subjected to heat treatment.

Comparative Example 1-3

The same process as in Example 1-1 was performed, except that the first heating temperature was lowered and the flow rate and residence time of silane gas were reduced so that the silicon content in the silicon-carbon composite became 37 parts by weight.

Comparative Example 1-4

The same process as in Example 1-1 was performed, except that the first heating temperature was lowered and the flow rate and residence time of silane gas were increased so that the silicon content in the silicon-carbon composite became 62 parts by weight.

**<Evaluation 1: Measurement of Content of Each Component of Silicon-Carbon Composites>**

The pH, silicon content, and oxygen (O) content of the silicon-carbon composites prepared in the Examples and Comparative Examples were measured by the following methods, and the results are shown in Table 1.

- pH:

After adding 10 g of the silicon-carbon composite to 100 g of an aqueous solution and mixing them with a homo mixer for 1 hour, the pH of the dispersion was measured.

- Silicon content:

The silicon content was calculated by estimating the weight excluding the carbon (C) content analyzed by a CS analyzer (Bruker, G8 Galileo) and the oxygen (O) content analyzed by an ONH analyzer (Bruker, G-4 ICARUS SeriesII).

- Oxygen (O) content:

The oxygen (O) content was analyzed using an ONH analyzer (Bruker, G-4 ICARUS SeriesII).

**<Evaluation 2: XPS Analysis of Surface of Silicon-Carbon Composites>**

The XPS analysis may be performed under the following conditions.

- Device used: NEXSA G2, Thermo Fisher Scientific (Equipment name ESCA-03)
- Sample preparation: the powdered sample is placed into the powder holder and pressed, and the measurement surface is flattened.
- Measurement conditions:

X-ray source: Monochromated Al K$\alpha$ (1486.6 eV)
Etching conditions (sputtering gun): monatomic Ar (energy: 1,000 eV, current: low, raster width: 2 mm), 0.13 nm/s etching rate (based on $Ta_2O_5$, which may vary depending on the sample)
Charge compensation (flood gun): 0.3 V, 150 $\mu$A
Survey scan: pass energy 200 eV, energy step 1 eV
Narrow scan: pass energy 50 eV, energy step 0.1 eV
Sensitivity factor (SF): Al THERMO1, Energy correction factor (ECF): TPP-2MBackground subtraction" Smart

When the intensity value of the maximum peak in the 284 to 285.5 eV band region in XPS analysis of the surface of the silicon-carbon composite was set to 1, the intensity value of the maximum peak in the 288 to 289 eV band region (ratio of intensity values of maximum peak) is shown in Table 1 below.

[Table 1]

|  | pH | Silicon content (based on 100 parts by weight of silicon-carbon composite) | Oxygen content (based on 100 parts by weight of silicon-carbon composite) | Ratio of intensity values of maximum peak |
|---|---|---|---|---|
| Example 1-1 | 6.8 | 48 | 1.7 | 0.02 |
| Example 1-2 | 7.6 | 51 | 1.8 | 0.01 |
| Example 1-3 | 6.6 | 49 | 12 | 0.03 |
| Comparative Example 1-1 | 5.3 | 48 | 2.7 | 0.16 |
| Comparative Example 1-2 | 10.3 | 48 | 2.9 | 0.06 |
| Comparative Example 1-3 | 6.8 | 37 | 1.5 | 0.01 |
| Comparative Example 1-4 | 5.6 | 62 | 3.5 | 0.15 |

<preparation of Negative Electrode Slurry>

Example 2-1

A negative electrode composition was prepared by using the silicon-carbon composite prepared in Example 1-1 as a negative electrode active material, two types of particle-type conductive material (SFG6L) and SWCNT (product name: Tuball, OCSiAl Company) as a conductive material, and an aqueous binder (product name: Daicel 2200) as a cellulose-based binder, and mixing the negative electrode active material, the particle-type conductive material, SWCNT, and the cellulose-based binder in a ratio of 81:8.6:0.8:9.6 (based on a weight ratio), and water was added as a solvent to prepare a negative electrode slurry.

Example 2-2

The same process as in Example 2-1 was performed, except that the silicon-carbon composite of Example 1-2 was used instead of the silicon-carbon composite of Example 1-1.

Example 2-3

The same process as in Example 2-1 was performed, except that the silicon-carbon composite of Example 1-3 was used instead of the silicon-carbon composite of Example 1-1.

Comparative Examples 2-1 to 2-4

The same process as in Example 2-1 was performed, except that the silicon-carbon composites of Comparative Examples 1-1 to 1-4 were used instead of the silicon-carbon composite of Example 1-1.

**<Evaluation 3: Measurement of Phase Stability (change in viscosity) of Negative Electrode Slurry>**

Using a TA rheometer, the shear viscosity was set at a shear rate of 2.5, and the viscosity of the negative electrode slurry after preparation and the viscosity after 24 hours of standing were each measured to determine the viscosity reduction rate relative to the initial viscosity.

**<Evaluation 4: Preparation of Battery and Evaluation of Battery Characteristics>**

The negative electrode slurry was coated on a copper foil with a thickness of 18 $\mu$m and dried to form an electrode active material layer with a thickness of 50 $\mu$m on one surface of the copper foil, which was then punched into a circular shape with a diameter of 14$\Phi$ (mm) to prepare a test electrode (negative electrode). A 0.3 mm thick metal lithium foil was used as a positive electrode. A porous polyethylene sheet with a thickness of 0.1 mm was used as a separator. In addition, a solution obtained by dissolving $LiPF_6$ as a lithium salt at a concentration of 1 mol/L in a mixed solvent of ethylene carbonate (EC) and diethyl carbonate (DEC) with a volume ratio of 1:1 was used as an electrolyte solution.
The negative electrode, the positive electrode, the separator, and the electrolyte solution were sealed in a stainless steel container to prepare a coin cell for evaluation with a thickness of 2 mm and a diameter of 32 mm.

The coin cell was charged at a constant current of 0.05 C until the voltage became 0.01 V, and then discharged at a constant current of 0.05 C until the voltage became 1.0 V to confirm the discharge capacity and the initial efficiency. The results are shown in Table 2 below.

Based on the results of a single charge-discharge cycle, the initial efficiency (%) was derived using the following calculation formula.

initial efficiency (%) = {discharge capacity of negative electrode active material (mAh/g)/charge capacity of negative electrode active material (mAh/g)} * 100%

[Table 2]

| | Phase stability of slurry Viscosity reduction rate (%) | Intensity value of maximum peak | Initial efficiency (%) | Initial discharge capacity (mAh/g) |
|---|---|---|---|---|
| Example 2-1 | 5 | 0.03 | 89 | 1850 |
| Example 2-2 | 2 | 0.01 | 88 | 1900 |
| Example 2-3 | 2 | 0.02 | 84 | 1500 |
| Comparative Example 2-1 | 80 | 0.16 | 85 | 1730 |
| Comparative Example 2-2 | 70 | 0.03 | 85 | 1720 |
| Comparative Example 2-3 | 5 | 0.01 | 88 | 1230 |
| Comparative Example 2-4 | 84 | 0.15 | 84 | 1890 |

According to Table 2, in the case of Comparative Example 2-1 where the negative electrode slurry was prepared using a silicon-carbon composite (Comparative Example 1-1) that did not include a carbon layer and had a pH of less than 6 (pH 5.3), it was confirmed that the change in the molecular weight of the cellulose-based binder due to the interactions between the negative electrode binder and the negative electrode active material was significant, and the viscosity of the negative electrode composition was greatly reduced due to the decrease in the viscosity of the binder.

In the case of Comparative Example 2-2 where the negative electrode slurry was prepared using the silicon-carbon composite (Comparative Example 1-2) having a pH exceeding 8 (pH 10.3), it was confirmed that the change in the molecular weight of the cellulose-based binder due to the interactions between the negative electrode binder and the negative electrode active material was significant, and similarly, the viscosity of the negative electrode slurry was greatly reduced due to the decrease in the viscosity of the binder.

In the case of Comparative Example 2-3 where the negative electrode slurry was prepared using the silicon-carbon composite (Comparative Example 1-3) having a silicon content of less than 40 parts by weight (37 parts by weight), it was confirmed that it was not easy to increase the capacity of the electrode due to insufficient initial capacity.

In the case of Comparative Example 2-4 where the negative electrode slurry was prepared using the silicon-carbon composite (Comparative Example 1-4) having a silicon content exceeding 60 parts by weight (62 parts by weight), it was confirmed that the change in the molecular weight of the cellulose-based binder due to the interactions between the negative electrode binder and the negative electrode active material was significant, gas was generated severely due to the oxidation reaction of silicon during the preparation of the negative electrode slurry, the viscosity of the negative electrode slurry was greatly reduced, and it was not easy to increase the electrode capacity despite the increase in the silicon content.

In the case of Example 2-3 where the negative electrode slurry was prepared using the silicon-carbon composite (Example 1-3) having a pH of 6 to 8 (pH 6.6) and a silicon content of 40 to 60 parts by weight (51 parts by weight), it was confirmed that the change in the molecular weight of the cellulose-based binder due to the interaction between the negative electrode binder and the negative electrode active material was small, and the viscosity reduction rate of the negative electrode slurry was small. However, it was confirmed that the oxygen (O) content exceeded 10 parts by weight (12 parts by weight) based on the total of 100 parts by weight of the silicon-carbon composite, and thus the lithium availability loss increased, resulting in a decrease in the initial efficiency of the electrode.

**Claims**

**1.** A negative electrode slurry comprising:

a silicon-carbon composite having a pH of 6 to 8 and a silicon content of 40 to 60 parts by weight based on a total of 100 parts by weight of the silicon-carbon composite;
a cellulose-based binder; and
a conductive material.

2. The negative electrode slurry of claim 1, wherein when an intensity value of a maximum peak in a 284 to 285.5 eV band region is set to 1 in XPS analysis of a surface of the silicon-carbon composite, an intensity value of a maximum peak in a 288 to 289 eV band region is 0.1 or less.

3. The negative electrode slurry of claim 1, wherein an oxygen (O) content in the silicon-carbon composite is 10 parts by weight or less based on the total of 100 parts by weight of the silicon-carbon composite.

4. The negative electrode slurry of claim 1, wherein the silicon-carbon composite comprises a carbon layer provided on at least a portion of a surface thereof.

5. The negative electrode slurry of claim 1, wherein an average particle diameter D50 of the silicon-carbon composite is 1 $\mu$m to 20 $\mu$m.

6. The negative electrode slurry of claim 1, wherein a specific surface area of the silicon-carbon composite is 20 m$^2$/g or less.

7. The negative electrode slurry of claim 1, further comprising a carbon-based active material.

8. A negative electrode comprising:

a current collector; and
a negative electrode active material layer provided on at least one surface of the current collector and comprising the negative electrode slurry of any one of claims 1 to 7.

9. A lithium secondary battery comprising:

the negative electrode of claim 8;
a separator; and
a positive electrode.

10. A battery module comprising the lithium secondary battery of claim 9.

11. A battery pack comprising the lithium secondary battery of claim 9.

12. A battery pack comprising the battery module of claim 10.

## INTERNATIONAL SEARCH REPORT

| International application No. |
| --- |
| **PCT/KR2025/001402** |

### A. CLASSIFICATION OF SUBJECT MATTER

**H01M 4/38**(2006.01)i; **H01M 4/583**(2010.01)i; **H01M 4/62**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/38(2006.01); C01B 32/05(2017.01); C01B 32/963(2017.01); H01G 11/30(2013.01); H01G 11/34(2013.01); H01M 4/139(2010.01); H01M 4/1393(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘-카본 복합체 (silicon-carbon composite), 셀룰로오스 (cellulose), 바인더 (binder), 도전재 (conductive agent), 음극 (anode), pH, 비정질 다공성 탄소 스캐폴드 (amorphous porous carbon scaffold)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2023-0091915 A (GROUP14 TECHNOLOGIES, INC.) 23 June 2023 (2023-06-23) See abstract; paragraphs [0277], [0289], [0335], [0346], [0374], [0388], [0405]-[0409], [0447], [0474] and [0559]; tables 5 and 10; and claims 1, 14, 32 and 33. | 1-12 |
| A | KR 10-2019-0051376 A (LG CHEM, LTD.) 15 May 2019 (2019-05-15) See abstract; and claims 1-15. | 1-12 |
| A | KR 10-2016-0079910 A (KABUSHIKI KAISHA TOYOTA JIDOSHOKKI) 06 July 2016 (2016-07-06) See abstract; and claims 1-17. | 1-12 |
| A | KR 10-2014-0114786 A (WACKER CHEMIE AG) 29 September 2014 (2014-09-29) See abstract; and claims 1-15. | 1-12 |
| A | JP 2018-511905 A (AXIUM IP, LLC) 26 April 2018 (2018-04-26) See abstract; and claims 1-35. | 1-12 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 May 2025** | **02 May 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/001402**

| Patent document cited in search report | | | Publication date (day/month/year) | Patent family member(s) | | | Publication date (day/month/year) |
|---|---|---|---|---|---|---|---|
| KR | 10-2023-0091915 | A | 23 June 2023 | CN | 108475779 | A | 31 August 2018 |
| | | | | CN | 108475779 | B | 23 March 2021 |
| | | | | CN | 113224274 | A | 06 August 2021 |
| | | | | CN | 119419246 | A | 11 February 2025 |
| | | | | EP | 3341990 | A1 | 04 July 2018 |
| | | | | EP | 3836261 | A1 | 16 June 2021 |
| | | | | EP | 4286355 | A2 | 06 December 2023 |
| | | | | EP | 4286355 | A3 | 01 May 2024 |
| | | | | EP | 4512791 | A2 | 26 February 2025 |
| | | | | JP | 2018-534720 | A | 22 November 2018 |
| | | | | JP | 2022-153561 | A | 12 October 2022 |
| | | | | JP | 2024-073597 | A | 29 May 2024 |
| | | | | JP | 7115976 | B2 | 09 August 2022 |
| | | | | JP | 7458445 | B2 | 29 March 2024 |
| | | | | JP | 7624539 | B2 | 30 January 2025 |
| | | | | KR | 10-2018-0113187 | A | 15 October 2018 |
| | | | | KR | 10-2023-0092015 | A | 23 June 2023 |
| | | | | KR | 10-2024-0023451 | A | 21 February 2024 |
| | | | | KR | 10-2528934 | B1 | 08 May 2023 |
| | | | | KR | 10-2528934 | B9 | 05 March 2025 |
| | | | | KR | 10-2636894 | B1 | 19 February 2024 |
| | | | | KR | 10-2636894 | B9 | 05 March 2025 |
| | | | | KR | 10-2637617 | B1 | 19 February 2024 |
| | | | | KR | 10-2637617 | B9 | 12 February 2025 |
| | | | | US | 10147950 | B2 | 04 December 2018 |
| | | | | US | 10608254 | B2 | 31 March 2020 |
| | | | | US | 10756347 | B2 | 25 August 2020 |
| | | | | US | 10784512 | B2 | 22 September 2020 |
| | | | | US | 10923722 | B2 | 16 February 2021 |
| | | | | US | 11437621 | B2 | 06 September 2022 |
| | | | | US | 11495798 | B1 | 08 November 2022 |
| | | | | US | 11646419 | B2 | 09 May 2023 |
| | | | | US | 2017-0170477 | A1 | 15 June 2017 |
| | | | | US | 2019-0280298 | A1 | 12 September 2019 |
| | | | | US | 2020-0075954 | A1 | 05 March 2020 |
| | | | | US | 2020-0152983 | A1 | 14 May 2020 |
| | | | | US | 2020-0365896 | A1 | 19 November 2020 |
| | | | | US | 2022-0231296 | A1 | 21 July 2022 |
| | | | | US | 2022-0352517 | A1 | 03 November 2022 |
| | | | | US | 2023-0058348 | A1 | 23 February 2023 |
| | | | | WO | 2017-040299 | A1 | 09 March 2017 |
| KR | 10-2019-0051376 | A | 15 May 2019 | CN | 111316479 | A | 19 June 2020 |
| | | | | CN | 111316479 | B | 03 May 2022 |
| | | | | EP | 3690997 | A2 | 05 August 2020 |
| | | | | KR | 10-2244952 | B1 | 27 April 2021 |
| | | | | US | 11495797 | B2 | 08 November 2022 |
| | | | | US | 2021-0184216 | A1 | 17 June 2021 |
| | | | | WO | 2019-088808 | A2 | 09 May 2019 |
| | | | | WO | 2019-088808 | A3 | 20 June 2019 |
| KR | 10-2016-0079910 | A | 06 July 2016 | CN | 105849947 | A | 10 August 2016 |

Form PCT/ISA/210 (patent family annex) (July 2022)

# EP 4 715 900 A1

| INTERNATIONAL SEARCH REPORT | International application No. |
|---|---|
| Information on patent family members | **PCT/KR2025/001402** |

| Patent document cited in search report | | | Publication date (day/month/year) | Patent family member(s) | | | Publication date (day/month/year) |
|---|---|---|---|---|---|---|---|
| | | | | CN | 105849947 | B | 13 December 2019 |
| | | | | DE | 112014006065 | B4 | 10 January 2019 |
| | | | | DE | 112014006065 | T5 | 15 September 2016 |
| | | | | JP | 6112228 | B2 | 12 April 2017 |
| | | | | KR | 10-1699246 | B1 | 24 January 2017 |
| | | | | US | 10333139 | B2 | 25 June 2019 |
| | | | | US | 2017-0033355 | A1 | 02 February 2017 |
| | | | | WO | 2015-097974 | A1 | 02 July 2015 |
| KR | 10-2014-0114786 | A | 29 September 2014 | CA | 2846922 | A1 | 19 September 2014 |
| | | | | CN | 104058404 | A | 24 September 2014 |
| | | | | DE | 102013204799 | A1 | 25 September 2014 |
| | | | | EP | 2782167 | A1 | 24 September 2014 |
| | | | | JP | 2014-183043 | A | 29 September 2014 |
| | | | | TW | 201437143 | A | 01 October 2014 |
| | | | | US | 2014-0287315 | A1 | 25 September 2014 |
| JP | 2018-511905 | A | 26 April 2018 | EP | 3254321 | A1 | 13 December 2017 |
| | | | | EP | 3254321 | A4 | 18 July 2018 |
| | | | | KR | 10-2017-0127433 | A | 21 November 2017 |
| | | | | US | 2018-0269480 | A1 | 20 September 2018 |
| | | | | WO | 2016-126969 | A1 | 11 August 2016 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240013211

- KR 1020220089687 A